# EUROPÄISCHE PATENTSCHRIFT

(11) **EP 3 587 430 B1**
(45) Veröffentlichungstag und Bekanntmachung des Hinweises auf die Patenterteilung: **13.07.2022**
(21) Anmeldenummer: 18179835.6
(22) Anmeldetag: 26.06.2018
(51) Int. Cl.: C07F 9/72, C07F 9/90, C07F 9/94

(54) **HERSTELLUNG VON TRIALKYLPNICTOGEN**
MANUFACTURE OF TRIALKYL PNICTOGENS
PRODUCTION DE TRIALKYLPNICTOGÈNES

(43) Veröffentlichungstag der Anmeldung: 01.01.2020
(73) Patentinhaber: KE Materials L.L.C., Cheongbuk-eup Pyeongtaek-si, Gyeonggi-do (KR)
(72) Erfinder: Niedermeyer, Heiko, 44141 Dortmund (DE); Daelman, Manuel, 59415 Welver (DE)
(74) Vertreter: Zwicker, Jörk

(56) Entgegenhaltungen:
- DE-T2- 60 215 408
- JP-A- 2011 201 919
- US-B2- 7 847 043
- HENRY GILMAN ET AL: "Relative Reactivities of Organometallic Compounds. XVI. Detection of the -SH Group", JOURNAL OF THE AMERICAN CHEMICAL SOCIETY, Bd. 59, Nr. 5, 1. Mai 1937 (1937-05-01), Seiten 935-937, XP055500357, US ISSN: 0002-7863, DOI: 10.1021/ja01284a049
- Markus Wieber ET AL: "Synthese gemischtsubstituierter Triorganobismutane / Synthesis of Mixed Substituted Triorganobismuthanes", Zeitschrift für Naturforschung B, 1. November 1985 (1985-11-01), Seiten 1476-1480, XP055500337, DOI: 10.1515/znb-1985-1109 Gefunden im Internet: URL:https://www.google.com/url?sa=t&rct=j& q=&esrc=s&source=web&cd=2&ved=2ahUKEwiimM- X2vPcAhUFJFAKHegcCQMQFjABegQIBhAC&url=http %3A%2F%2Fzfn.mpdl.mpg.de%2Fdata%2FReihe_B% 2F40%2FZNB-1985-40b-1476.pdf&usg=AOvVaw3Bj L9Je_H6L05YTxiGYKXb

## Beschreibung

Die vorliegende Erfindung betrifft ein Verfahren zur Herstellung von Trialkylpnictogen sowie nach diesem Verfahren hergestelltes Trialkylpnictogen mit einem geringen Gehalt an Aluminiumhaltigen und chlorhaltigen Verbindungen und deren Verwendung für die Herstellung von PET-Detektoren.

### Beschreibung

Trialkylpnictogene wie beispielsweise Trialkylbismuth oder Trialkylantimon sind von wirtschaftlicher Bedeutung in der elektronischen Industrie für die Herstellung von epitaktischen Schichten auf Halbleitern und als Quenchungsmittel in der Herstellung von Polycarbonatschmelzen. Eine essentielle Voraussetzung dafür ist, dass das Bismuthalkyl in einer hohen Reinheit vorliegt. Diese Bedingung stellt eine hohe Anforderung an die Herstellungsverfahren für Trialkylbismuth.

Höhere Trialkylpnictogene können typischerweise durch die Umsetzung von Pnictogentrihalogenid der allgemeinen Formel MX₃ mit Trialkylaluminium der allgemeinen Formel AlR₃ gemäß der Reaktionsgleichung (I) hergestellt werden

MX₃ + AlR₃ → MR₃ + AlX₃ (I).

Häufig ist vor allem die Herstellung von Trimethylbismuth (TMBi) aus der Umsetzung von Bismuthtrichlorid mit Trimethylaluminium (TMA) gemäß der Reaktionsgleichung (II)

BiCl₃ + Al(CH₃)₃ → Bi(CH₃)₃ + AlCl₃ (II).

Bei der Synthese von Trimethylbismuth aus Bismuthtrihalogenid und Trimethylaluminium fallen neben dem gewünschten Produkt auch nicht näher spezifizierte aluminium- und chlorhaltige Nebenverbindungen an. Vermutlich handelt es sich hierbei um Dimethylaluminiumchlorid (DMAC), Methylaluminiumdichlorid (MADC) sowie nicht näher spezifizierte Bismuthverbindungen. Diese lassen sich durch bloße Rektifikation über eine Füllkörperkolonne nicht ausreichend entfernen um für einen zufriedenstellenden industriellen Gebrauch geeignet zu sein. Wünschenswert ist Trialkylbismuth mit einem möglichst niedrigen Gehalt an aluminium- oder chlorhaltigen Verbindungen, bevorzugt mit 1 Gew.-% oder weniger aluminiumhaltige Verbindungen und 100 ppm oder weniger chlorhaltigen Verbindungen.

Ein niedriger Gehalt an Nebenverbindungen ist essentiell um eine lange Lebensdauer der durch die Positronenemission im PET-Detektor entstandenen freien Ladungsträger zu ermöglichen, da diese beispielsweise durch oxidische Verbindungen eingefangen werden könnten.

Aus dem Stand der Technik sind Verfahren zur Herstellung und Aufreinigung von Metallalkylen bekannt.

So ist beispielsweise aus GB-A-2201418 bzw. Chemtronics, 1988, Vol. 3, 38 ein Herstellungsverfahren für reine Metallalkyle der dritten Hauptgruppe des Periodensystems bekannt (z.B.: Trialkylaluminium, Trialkylgallium, Trialkylindium), umfassend die Schritte des Auflösens des unreinen Metallalkyls in einem geeigneten Lösungsmittel, Zugabe eines **Stickstoff-Donor-Liganden,** beispielsweise Methylenbis(N,N-dimethylanilin), Kristallisation des Addukts und Aufspaltung des Addukts im Vakuum. Die Wahl des Stickstoff-Donor-Ligandens ist laut GB-A-2201418 entscheidend, da nicht alle stickstoffhaltigen Basen in der Lage sind, eine vollständige Aufspaltung des Metallalkyl-Adduktes zu bewirken. Das Verfahren weist jedoch den Nachteil auf, dass ein zeitintensiver und die Ausbeute vermindernder Schritt zur Kristallisation notwendig ist.

Es ist bekannt aus Methoden der organischen Chemie (Houben-Weyl) Band 13/4, Metallorganische Verbindungen des Al, Ga, In, Ti, E. Müller, ed., Georg Thieme Verlag, Stuttgart, West Germany, 1970, dass Aluminiumalkyle und -chloride stabile Komplexe mit **tertiären Aminen** bilden, die gegen thermische Belastung in einem weiten Temperaturbereich **stabil** sind. Durch die Verwendung eines **hochsiedenden, tertiären Amins,** bspw. Trioctylamin (TOAm) mit einem Siedepunkt von 365-367 °C, sind ferner nach Destillation keine weiteren Verunreinigungen durch das Amin selbst zu erwarten.

Ein ähnliches Verfahren ist auch in JP 2008-024617 zur Herstellung von hochreinen Metallalkylen der dritten Hauptgruppe offenbart. Trialkylaluminium wird mit Trialkylaminen umgesetzt um einen Aminkomplex zu bilden. Hochreines Trialkylaluminium wird durch Dissoziation des Komplexes erhalten.

WO-A-85/04405 offenbart ein Verfahren zur Herstellung von Trialkylbismuth über ein Aryl-haltiges Addukt und anschließender thermischer Dissoziation.

Entsprechende Herstellungsverfahren für Pnictogenalkyle, wie beispielsweise Trialkylbismuth, sind jedoch nicht bekannt.

DE 602 15 408 offenbart Verfahren zur Herstellung von Metallalkylen der Gruppe VA durch Umsetzen von Trihalogeniden der Gruppe VA und Alkylen der Gruppe IIIA in Gegenwart von tertiären Aminen in Kohlenwasserstoff-Lösungsmitteln.

WO-A-13/116025 offenbart ein Verfahren zur Herstellung von Trialkylgallium und Trialkylindium durch Umsetzung von Gallium- oder Indiumtrihalogenid mit Trialkylaluminium in Gegenwart von Alkalihalogenid und einer erdalkalimetallhaltigen ionischen Flüssigkeit der Formel M[AlRₙX₍₄₋ₙ₎].

Die nach den im Stand der Technik bekannten Verfahren hergestellten Trialkylpnictogene enthalten hohe Mengen an aluminiumhaltigen und chlorhaltigen Verbindungen. Diese konnten auch durch Rektifikation über eine Füllkörperkolonne nicht erfolgreich entfernt werden.

Die bekannten Verfahren zur Herstellung von Trialkylpnictogen sind somit für bestimmte Anwendungszwecke nicht befriedigend, da danach kein Trialkylpnictogen mit niedrigem Gehalt an aluminiumhaltigen Verbindungen und gleichzeitig niedrigem Gehalt an chlorhaltigen Verbindungen hergestellt werden kann.

Demgemäß lag eine **Aufgabe** der vorliegenden Erfindung in der Bereitstellung eines Verfahrens zur Herstellung von Trialklypnictogenen mit geringem Gehalt an aluminium- und chlorhaltigen Verbindungen, bevorzugt mit einem Gehalt an aluminiumhaltigen Verbindungen von weniger als 1 Gew.-% und chlorhaltigen Verbindungen von weniger als 100 ppm, sowie die nach diesem Verfahren erhaltenen Trialcylpnictogene.

Überraschend wurde nun gefunden, dass die Zugabe von Trialkylamin zu Trialkylpnictogen und die anschließende Destillation des Trialkylpnictogen zu Produkten mit niedrigen Gehalten an sowohl aluminiumhaltigen als auch chlorhaltigen Verbindungen, wie beispielsweise Chloriden, führt.

Es konnte überraschend festgestellt werden, dass durch Destillation eines Gemisches aus Trialkylamin und Trialkylpnictogen aus der Umsetzung von Pnictogentrihalogenid mit Trialkylaluminium gleichzeitig eine nahezu vollständige Entfernung sowohl von aluminiumhaltigen als auch chlorhaltigen Verbindungen, wie beispielsweise Chloriden, möglich ist.

Die Lösung der Aufgabe und Gegenstand der vorliegenden Erfindung ist somit ein Verfahren zur Herstellung von Verbindungen der allgemeinen Formel MR₃, umfassend die folgenden Schritte
(i) **Umsetzung** von Pnictogentrihalogenid der allgemeinen Formel MX₃ mit Trialkylaluminium der allgemeinen Formel AlR₃ zu Trialkylpnictogen der allgemeinen Formel MR₃, gemäß der Reaktionsgleichung (I)

   MX₃ + AlR₃ → MR₃ + AlX₃ (I)

   wobei
   M Bismuth oder Antimon, besonders bevorzugt Bismuth ist,
   X jeweils unabhängig voneinander ein Halogen, bevorzugt Chlor, Brom oder Iod, besonders bevorzugt Chlor ist und
   R jeweils unabhängig voneinander ein geradliniger oder verzweigter Alkyl Rest mit 1 bis 6 C-Atomen, bevorzugt mit 1 bis 4 C-Atomen, besonders bevorzugt Methyl oder Ethyl und ganz besonders bevorzugt Methyl ist und
(ii) **Destillation** von Trialkylpnictogen der allgemeinen Formel MR₃ in Gegenwart von Trialkylamin der allgemeinen Formel N(R¹)₃, wobei R¹ jeweils unabhängig voneinander ein geradliniger oder verzweigter Alkylrest mit 6 bis 12 C-Atomen, bevorzugt 6 bis 10 C-Atomen und ganz besonders bevorzugt 8 C-Atomen ist

Es sei an dieser Stelle angemerkt, dass der Rahmen der Erfindung alle beliebigen und möglichen Kombinationen der oben stehenden und im Folgenden aufgeführten, allgemeinen oder in Vorzugsbereichen genannten Komponenten, Wertebereiche bzw. Verfahrensparameter umfasst.

Der Begriff **"Trialkylaluminium"** umfasst im Rahmen dieser Erfindung eine Aluminiumverbindung der allgemeinen Formel AlR₃, wobei R jeweils unabhängig voneinander ein geradliniger oder verzweigter Alkylrest mit 1 bis 6 C-Atomen, bevorzugt 1 bis 4 C-Atomen, besonders bevorzugt Methyl oder Ethyl und ganz besonders bevorzugt Methyl ist.

Der Begriff **"Trialkylpnictogen"** umfasst im Rahmen dieser Erfindung eine Pnictogenverbindung der allgemeinen Formel MR₃, wobei M ein Pnictogen, bevorzugt Bismuth oder Antimon und besonders bevorzugt Bismuth ist und R jeweils unabhängig voneinander ein geradliniger oder verzweigter Alkylrest mit 1 bis 6 C-Atomen, bevorzugt 1 bis 4 C-Atomen, besonders bevorzugt Methyl oder Ethyl und ganz besonders bevorzugt Methyl ist. Am meisten bevorzugt ist Trimethylbismuth.

Der Begriff **"Trialkylamin"** umfasst im Rahmen dieser Erfindung eine Verbindung der allgemeinen Formel N(R¹)₃, wobei R¹ jeweils unabhängig voneinander ein geradliniger oder verzweigter Alkylrest mit 6 bis 12 C-Atomen, bevorzugt 6 bis 10 C-Atomen und besonders bevorzugt 8 C-Atomen ist. Besonders bevorzugt sind Tributylamin und Trioctylamin. Ganz besonders bevorzugt ist Trioctylamin.

### Schritt (i): Umsetzung Pnictogentrihalogenid mit Trialkylaluminium

In Schritt (i) wird Pnictogentrihalogenid mit Trialkylaluminium (AlR₃) umgesetzt.

Das Verhältnis der eingesetzten Mengen Pnictogentrihalogenid zu Trialkylaluminium beträgt von 1:1 bis 1:5. Bevorzugt beträgt das Verhältnis der eingesetzten Mengen Pnictogentrihalogenid zu Trialkylaluminium 1:1 bis 1:3, besonders bevorzugt 1:1,2 bis 1:1,6.

In einer bevorzugten Ausführungsform wird das Pnictogentrihalogenid in Schritt (i) in einem Medium suspendiert. Bevorzugte Medien sind nicht wechselwirkende aliphatische oder aromatische Lösungsmittel, Destillatschnitt, d.h. hochsiedende Alkane, bevorzugt mit einem Siedepunkt über dem des hergestellten Trialkylpnictogen, Weißöl oder Trialkylamin, besonders bevorzugt Weißöl.

In einer bevorzugten Ausführungsform wird Pnictogentrihalogenid in Weißöl vorgelegt und Trialkylaluminium zugegeben.

Die Zugabe des Trialkylaluminiums zum Pnictogentrihalogenid in Schritt (i) erfolgt über einen **Zeitraum** von 1 Minute bis 10 Stunden, bevorzugt 1,5 Stunden bis 3 Stunden.

In einer bevorzugten Ausführungsform wird in Schritt (i) Pnictogentrihalogenid vorgelegt und Trialkylaluminium über einen Zeitraum von 1 Minute bis 10 Stunden, bevorzugt 1,5 Stunden bis 3 Stunden, erfolgt.

Die Umsetzung von Pnictogentrihalogenid mit Trialkylaluminium in Schritt (i) erfolgt typischerweise bei einer **Reaktionstemperatur** von 25 bis 120 °C, bevorzugt bei 60 bis 110 °C und besonders bevorzugt bei 95 bis 105 °C.

In einer bevorzugten Ausführungsform wird nach vollständiger Zugabe des Trialkylaluminiums die Reaktion bei gleichbleibender Temperatur für 1 Minute bis 10 Stunden, bevorzugt für 15 bis 45 Minuten, weitergeführt.

In einer bevorzugten Ausführungsform erfolgt die Umsetzung von Pnictogentrihalogenid mit Trialkylaluminium in Gegenwart von Alkalihalogeniden, besonders bevorzugt in Gegenwart von Lithiumchlorid (LiCI), Natriumchlorid (NaCl), Kaliumchlorid (KCl), Cäsiumchlorid (CsCl), Lithiumfluorid (LiF), Natriumfluorid (NaF), Kaliumfluorid (KF), Cäsiumfluorid (CsF), Lithiumbromid (LiBr), Natriumbromid (NaBr), Kaliumbromid (KBr), oder Cäsiumbromid (CsBr).

Ganz besonders bevorzugt erfolgt die Umsetzung von Pnictogentrihalogenid mit Trialkylaluminium in Gegenwart von Natriumchlorid. In einer ganz besonders bevorzugten Ausführungsform des Schrittes (i) des erfindungsgemäßen Verfahrens wird Bismuthtrihalogenid in Weißöl vorgelegt, Natriumchlorid zugegeben und anschließend Trialkylaluminium zugegeben.

Das Verhältnis von Alkalihalogenid zu Trialkylaluminium beträgt 5:1 bis 1:5, bevorzugt 3:1 bis 1:3 und besonders bevorzugt 1,5:1 bis 1:1,5.

### Schritt (ia): Destillation von Trialkylpnictogen (optional)

In einer alternativen Ausführungsform des erfindungsgemäßen Verfahrens wird nach der Umsetzung in Schritt (i) in einem Schritt (ia) die Destillation des Trialkylpnictogen in einer dem Fachmann bekannten Art und Weise durchgeführt.

In einer Ausführungsform erfolgt die Destillation in Schritt (ia) bei Normaldruck bei einer Temperatur von 75 bis 135 °C, bevorzugt bei einer Temperatur von 85 bis 125 °C und besonders bevorzugt bei einer Temperatur von 95 bis 115 °C.

In einer bevorzugten Ausführungsform erfolgt die Destillation unter vermindertem Druck, besonders bevorzugt unter einem Druck von 50 mbar oder weniger.

In einer weiteren Ausführungsform erfolgt die Destillation in einer Destillationsapparatur ausgestattet mit einer Füllkörperkolonne.

Das Trialkylpnictogen-Destillat welches in Schritt (ia) erhalten wird, weist eine Konzentration an chlorhaltigen Verbindungen von mehr als 100 ppm und eine Konzentration an aluminiumhaltigen Verbindungen von mehr als 1 Gew.-% auf.

### Schritt (ii): Destillation von Trialkylpnictogen

In Schritt (ii) wird das hergestellte Trialkylpnictogen in Gegenwart von hochsiedenden Trialkylamin der allgemeinen Formel N(R¹)₃ destilliert und von den aluminiumhaltigen und chlorhaltigen Verbindungen getrennt.

Bevorzugtes Trialkylamin ist nichtverzweigtes Triocytlamin (N(C₈H₁₇)₃).

Die Zugabe des erfindungsgemäßem Trialkylamins kann bereits während des Schritts (i) erfolgen.

Die Zugabe des erfindungsgemäßem Trialkylamins während des Schritts (i) hat den Vorteil, dass kein weiteres Lösungsmittel, wie beispielsweise Weißöl, eingesetzt werden muss.

Bei den hohen Reaktionstemperaturen des Schritt (i) kann eine teilweise Zersetzung des Amins stattfinden und aliphatische Reste zurückbleiben. In diesem Fall ist die Zugabe von Trialkylamin mit einer möglichst geringen Ketten länge bevorzugt, da diese nur kurzkettige und somit leichtflüchtige Zersetzungsprodukte bilden.

Die Zugabe von Trialkylamin **nach** Durchführung von Schritt (ia) ist bevorzugt

Die eingesetzte **Menge** an Trialkylamin beträgt im Verhältnis zum vorliegenden Trialkylaluminium 10:1 bis 1:10, bevorzugt 5:1 bis 1:5, besonders bevorzugt 2:1 bis 1:2.

Die Zugabe des Trialkylamins kann in einem oder mehreren **Schritten,** bevorzugt in einem Schritt, erfolgen.

Die Zugabe kann über einen **Zeitraum** von 1 Minuten bis 2 Stunden erfolgen, bevorzugt über einen Zeitraum von 5 bis 20 Minuten.

Die Zugabe kann bei einer Temperatur von 5 bis 50 °C erfolgen, bevorzugt bei Raumtemperatur von 23+/-2°C.

Ohne sich in irgendeiner Form wissenschaftlich festlegen zu wollen mutmaßt die Anmelderin, dass Dimethylaluminiumchlorid (DMAC) und Methylaluminiumdichlorid (MADC) und andere aluminiumhaltige und/oder chlorhaltige Verbindungen in der Reaktionsmischung aus Schritt (i) oder im Trialkylpnictogen-Destillat aus Schritt (ia) durch die Umsetzung mit dem Trialkylamin stabile Komplexe bilden, von welchen das Trialkylpnictogen mittels Destillation abgetrennt werden kann.

Die Destillation kann in jeder dem Fachmann bekannten Art und Weise durchgeführt werden.

Typischerweise erfolgt die Destillation bei Normaldruck bei einer Temperatur von 75 bis 135 °C, bevorzugt bei einer Temperatur von 85 bis 125 °C und besonders bevorzugt bei einer Temperatur von 95 bis 115 °C

In einer bevorzugten Ausführungsform erfolgt die Destillation unter vermindertem Druck, besonders bevorzugt unter einem Druck von 50 mbar oder weniger.

In einer weiteren Ausführungsform erfolgt die Destillation in einer Destillationsapparatur ausgestattet mit einer Füllkörperkolonne.

Das Trialkylpnictogen-Destillat welches in Schritt (ii) hergestellt wird, weist einen Gehalt an chlorhaltigen Verbindungen von 100 ppm oder weniger und einen Gehalt an aluminiumhaltigen Verbindungen von 1 % oder weniger, bevorzugt 100 ppm oder weniger auf.

### Verfahren zur Verringerung des Gehalts an aluminium- und chlorhaltigen Verbindungen

Die vorliegende Erfindung umfasst außerdem weiterhin ein **Verfahren zur Verringerung des Gehalts an aluminium- oder chlorhaltigen Verbindungen** von Trialkylbismuth der allgemeinen Formel BiR₃, wobei R einen linearen oder verzweigten Alkylrest mit 1 bis 6 C-Atomen, bevorzugt 1 bis 4 C-Atomen, besonders bevorzugt Methyl oder Ethyl und ganz besonders bevorzugt Methyl darstellt, mit einem Gehalt von aluminiumhaltigen Verbindungen von mehr als 1 Gew.-% und einem Gehalt von chlorhaltigen Nebenverbindungen von mehr als 100 ppm, umfassend die Schritte **Zugabe** von Trialkylamin der allgemeinen Formel N(R¹)₃ zu einem aluminium- oder chlorhaltigen Trialkylbismuth der allgemeinen Formel BiR3, wobei R¹ jeweils unabhängig voneinander ein geradliniger oder verzweigter Alkylrest mit 6 bis 12 C-Atomen, bevorzugt 6 bis 10 C-Atomen und ganz besonders bevorzugt 8 C-Atomen ist und **Destillation** von Trialkylbismuth.

Die Beschreibung betrifft weiterhin **Trialkylbismuth** mit einem Gehalt an aluminiumhaltigen Verbindungen von 1 Gew.-% oder weniger und einem Gehalt an chlorhaltigen Verbindungen von 100 ppm oder weniger, welches nach einem erfindungsgemäßen Verfahren hergestellt wurde.

Die Erfindung betrifft weiterhin die **Verwendung** des nach dem erfindungsgemäßen Verfahren hergestellten Trialkylbismuth zur Herstellung von Detektoren für die Positronen-Emissions-Tomographie (PET).

Die Erfindung betrifft weiterhin die **Verwendung** des nach dem erfindungsgemäßen Verfahren hergestellten Trialkylbismuth als Quencher zur Herstellung von Polycarbonat.

Der **Vorteil** der Erfindung liegt insbesondere darin, dass erstmals Trialkylbismuth mit einem äußerst geringen Gehalt an aluminiumhaltigen Verbindungen und gleichzeitig einem äußerst geringen Gehalt an chlorhaltigen Verbindungen hergestellt werden kann.

### Beispiele

### Eingesetzte Materialien

- TMA: Trimethylaluminium; kommerziell erhältlich bei LANXESS Organometallics
- BiCl₃: Bismuthtrichlorid, >98% Reinheit; kommerziell erhältlich bei Merck
- Weißöl: Parol^{®}, CAS#: 8042-47-5; kommerziell erhältlich bei Sonneborn, LLC
- NaCl: Natriumchlorid, CAS#: 7647-14-5, getrocknet; kommerziell erhältlich bei Merck
- KF: Kaliumfluorid, CAS#: 7789-23-3, kommerziell erhältlich bei Merck
- TOAm: Tri-n-octylamin; kommerziell erhältlich bei Merck
- TBAm: Tri-n-butylamin; kommerziell erhältlich bei Merck

### Messmethoden

### Chlorid-Bestimmung:

Die Bestimmung des Gehalts an ionischem Chlorid erfolgte mittels argentometrischer Titration (Potentiometrie). Die zu untersuchende Probe wird auf 0,1 mg genau eingewogen und mit 0,005 mol/L Silbernitratlösung in einem Titrierautomat für potentiometrische Bestimmungen (Mettler Toledo T90) titriert.

### Al-Bestimmung:

Die Bestimmung des Aluminiumgehalts im Produkt erfolgte indirekt über die Analyse des 1H-Spektrums der Methylsignale der TMA-Reste am Aluminium in einem NMR-Spektrometer Avance II+ 400 (Bruker). Eine optimale Menge der Probe wird in deuterierten Lösemittel (C₆D₆) gelöst. Die Lösung wird in ein 5 mm-NMR-Rohr gefüllt und dieses mit einer Kunststoffkappe verschlossen und im NMR-Spektrometer vermessen. Die Nachweisgrenze von TMA in TMBi sind 0,01% m/m.

### Beispiel 1 -BiCl₃ + TMA + Destillation (nicht erfindungsgemäß)

59,4 g BiCl₃ (188 mmol) wird im Dreihalskolben vorgelegt und in 37,7 g Weißöl (Parol) suspendiert. Anschließend werden 38,8 g Al(CH₃)₃ (538 mmol) zugetropft (Molverhältnis BiCl₃:TMA = 1:2,86). Im Anschluss erfolgte eine Destillation im Vakuum bei 50 mbar über eine Standard-Destillationsbrücke. Das Destillat weist eine Menge von 65 Gew.-% Al-Verbindungen und 19,2 Gew.-% Chlorid auf.

### Beispiel 2 - BiCl₃ + TMA + Destillation und Füllkörperkolonne (nicht erfindungsgemäß)

Im Anschluss an Beispiel 1 wird eine weitere Destillation durchgeführt. Die weitere Destillation erfolgt im Vakuum bei 50 mbar mit einer V2A Füllkörperkolonne und Kondensatteiler. Das Destillat weist noch immer eine Menge von 3,2 Gew.-% Al-Verbindungen und 2,1 Gew.-% Chlorid auf.

### Beispiel 3 - BiCl₃ + TMA + KF + Destillation (nicht erfindungsgemäß)

77,2 g BiCl₃ (245 mmol) und 22,0 g KF (379 mmol) werden im Dreihalskolben vorgelegt und in 110 g Weißöl suspendiert. Anschließend wird 27,4 g Al(CH₃)₃ (379 mmol) innerhalb von 45 Minuten bei einer Reaktionstemperatur von 70 °C zugetropft (Molverhältnis BiCl₃:TMA = 1:1,55). Die Destillation erfolgte im Vakuum bei 50 mbar bei 100 °C über eine Standard-Destillationsbrücke. Das Destillat weist eine Menge von 7,4 Gew.-% AI-Verbindungen und 4,2 Gew.-% Chlorid auf.

### Beispiel 4 - BiCl₃ + TMA + NaCl + Destillation (nicht erfindungsgemäß)

208,2 g BiCl₃ (660 mmol) und 59,8 g NaCl (1023 mmol) werden im Dreihalskolben vorgelegt und in 200 g Weißöl (Parol) suspendiert. Anschließend wird 73,8 g Al(CH₃)₃ (1023 mmol) zugetropft (Molverhältnis BiCl₃:TMA = 1:1,55). Die Destillation erfolgte im Vakuum bei 50 mbar über eine Standard-Destillationsbrücke. Das Destillat weist eine Menge von 2,8 Gew.-% AI-Verbindungen und 2,0 Gew.-% Chlorid auf.

### Beispiel 5 - TMBi + KF (nicht erfindungsgemäß)

Zu einer Trimethylbismuth-Probe mit 3,3 Gew.-% TMA und 2,4 Gew.-% Chlorid wurden 1,4 g KF (23,9 mmol) zugegeben. Im Anschluss erfolgte erneut eine Destillation im Vakuum bei 50 mbar. Das Destillat weist eine Menge von 0,9 Gew.-% AI-Verbindungen und 0,79 Gew.-% Chlorid auf.

### Beispiel 6 - BiCl₃ + TBAm (nicht erfindungsgemäß)

53,1 g BiCl₃ (163 mmol) wird in 48,4 g TBAm (261 mmol) suspendiert und 18,8 g TMA (261 mmol) zugetropft (Molverhältnis BiCl₃:TMA = 1:1,55). Im Anschluss erfolgte eine Destillation im Vakuum bei 50 mbar über eine Standard-Destillationsbrücke. Das Destillat weist eine Menge von 0 Gew.-% AI-Verbindungen und 73 ppm Chlorid auf. Das Destillat enthält aliphatische Verunreinigungen.

### Beispiel 7 - BiCl₃ + TOAm (erfindungsgemäß)

50,1 g BiCl₃ (159 mmol) wird in 108,2 g TOAm (306 mmol) suspendiert und 22,0 g TMA (306 mmol) bei einer Reaktionstemperatur von 95-105 °C zugetropft (Molverhältnis BiCl₃:TMA = 1:1,9). Im Anschluss erfolgte eine Destillation im Vakuum bei 50 mbar über eine Standard-Destillationsbrücke. Das Destillat weist eine Menge von 0 Gew.-% Al-Verbindungen und <15 ppm Chlorid auf. Das Destillat enthält aliphatische Verunreinigungen.

### Beispiel 8 - TMBi + TOAm (erfindungsgemäß)

Eine TMBi-Probe mit TMA-Resten und Chlorid wurde einer Destillation im Vakuum bei 50 mbar über eine Standard-Destillationsbrücke unterzogen. Das Destillat enthielt noch immer 7,9 Gew.-% AI-Verbindungen und 1,6 Gew.-% Chlorid.

Zu 33,6 g Trimethylbismuth-Destillat wurden 4,7 g TOAm innerhalb von 10 Minuten bei Raumtemperatur unter Rühren zugegeben. Im Anschluss erfolgte eine Destillation im Vakuum bei 50 mbar über eine Standard-Destillationsbrücke. Das Destillat weist eine Menge von 0 Gew.-% AI-Verbindungen und <50 ppm Chlorid auf. Das Destillat enthält keine aliphatischen Verunreinigungen.

Die Ergebnisse der Beispiele sind in der nachfolgenden Tabelle 1 zusammengefasst.

**Tabelle 1: Ergebnisse der Beispiele 1 bis 8**

| **Bsp** | **BiCl₃ [g]** | **TMA [g]** | **Destillation: Bad/Sumpf Kopf Temp. [°C]** | **Ausbeute TMBi [g]** | **Al-Gehalt [%] (m/m)** | **Chlorid-Gehalt [%] (m/m)** |
|---|---|---|---|---|---|---|
| 1 VV | 59,4 (188 mmol) | 38,8 (538 mmol) | 55-100/-/34-46 | 85,3 | 65 | 19,2 |
| 2 VV | 84,0 TMBi | | 49,8/- | | 3,2 | 2,1 |
| | roh | | 29,8 | | | |
| 3 VV | 77,2 (245 mmol) | 27,4 (379 mmol) | 70/-/- | 35,5% (57%) | 7,4 | 4,2 |
| 4 VV | 208,2 (660 mmol) | 73,8 (1023 mmol) | 90-100/-/30-46 | 122,8 (73,2%) | 2,8 | 2,0 |
| 5 VV | 60,7 TMBi roh (23,9 mmol) | | 42 | | 0,9 | 0,79 |
| 6 VV | 53,1 (163 mmol) | 18,8 (261 mmol) | 90-120/80-90/26-33 | 23,0 (53,7%) | 0 | 73 ppm |
| 7 | 50,1 (159 mmol) | 22,0 (306 mmol) | 90-120/80-90/26-33 | 30,8 (76,2%) | 0 | <15 ppm |
| 8 | 33,6 TMBi (17-50) | | 55 | | 0 | <50 ppm |

Beispiel 1 zeigt, dass eine einfache Destillation nicht ausreichend ist, um geringe Mengen an AI-Verbindungen und geringe Mengen an Chlorid zu erreichen.

Beispiel 2 zeigt, dass selbst eine wiederholte Destillation über eine Füllkörperkolonne nicht ausreicht, um ein Trimethylbismuthprodukt mit geringer Menge an AI-Verbindungen und Chlorid zu erreichen.

Beispiele 3 und 4 zeigen, dass die Zugabe von Alkalihalogenid zur Reaktionsmischung zu einer Verringerung des Gehalts an AI-Verbindungen und Chlorid führt.

Beispiel 5 zeigt, dass auch eine (weitere) Destillation in Gegenwart von Alkalihalogenid nicht ausreichend ist um ein Produkt mit geringen Mengen an AI-Verbindungen und gleichzeitig Chlorid zu erhalten.

Beispiel 6 zeigt, dass die Destillation von Trialkylpnictogen in Gegenwart von Tributylamin zu einer herausragenden Reduktion des Gehalts an AI-Verbindungen und Chlorid führt.

Beispiele 7 und 8 zeigen, dass die Destillation von Trialkylpnictogen in Gegenwart von Trioctylamin zu einer herausragenden Reduktion des Gehalts an AI-Verbindungen und Chlorid führt. Es ist dabei unerheblich, ob das Trioctylamin wie in Beispiel 7 bereits während der Umsetzung des Bismuthtrichlorids mit dem Trimethylaluminium vorliegt wie in Beispiel 7, oder ob es erst nach einer vorangehenden Destillation des entstandenen Trimethylbismuts zugegeben wird. Die Destillation in Gegenwart von Trioctylamin führt zu einem noch geringeren Gehalt an Chlorid als die Destillation in Gegenwart von Tributylamin.

## Patentansprüche

1. Verfahren zur Herstellung von Trialkylpnictogen umfassend die Schritte
(i) **Umsetzung** von Pnictogentrihalogenid der allgemeinen Formel MX₃ mit Trialkylaluminium der allgemeinen Formel AlR₃ zu Trialkylpnictogen der allgemeinen Formel MR₃, gemäß der Reaktionsgleichung (I)
MX₃ + AlR₃ → MR₃ + AlX₃ (I)
wobei,
M Bismuth oder Antimon, bevorzugt Bismuth ist,
X jeweils unabhängig voneinander ein Halogen, bevorzugt Chlor, Brom oder Iod, besonders bevorzugt Chlor ist und
R jeweils unabhängig voneinander ein geradliniger oder verzweigter Alkyl Rest mit 1 bis 6 C-Atomen, bevorzugt mit 1 bis 4 C-Atomen, besonders bevorzugt Methyl oder Ethyl und ganz besonders bevorzugt Methyl ist und
(ii) **Destillation** von Trialkylpnictogen der allgemeinen Formel MR₃ in Gegenwart von Trialkylamin der allgemeinen Formel N(R¹)₃, wobei R¹ jeweils unabhängig voneinander ein geradliniger oder verzweigter Alkylrest mit 6 bis 12 C-Atomen, bevorzugt 6 bis 10 C-Atomen und ganz besonders bevorzugt 8 C-Atomen ist.

2. Verfahren nach Anspruch 1, **dadurch gekennzeichnet, dass** in Schritt (i) Pnictogentrihalogenid in einem Medium suspendiert wird, bevorzugt in einem nicht wechselwirkenden aliphatischen oder aromatischen Lösungsmittel, Destillatschnitt, Weißöl oder Trialkylamin, besonders bevorzugt in Weißöl.

3. Verfahren nach Anspruch 1 oder 2, **dadurch gekennzeichnet, dass** zwischen Schritt (i) und (ii) eine Destillation des Trialkylbismuths erfolgt.

4. Verfahren nach einem der Ansprüche 1 bis 3, **dadurch gekennzeichnet, dass** Schritt (i) in Gegenwart eines Alkalihalogenides, bevorzugt in Gegenwart von Natriumchlorid (NaCl), ), Kaliumchlorid (KCl), Natriumfluorid (NaF), Kaliumfluorid (KF), Natriumbromid (NaBr) oder Kaliumbromid (KBr) und besonders bevorzugt in Gegenwart von Natriumchlorid durchgeführt wird.

5. Verfahren nach einem der Ansprüche 1 bis 4, **dadurch gekennzeichnet, dass** in Schritt (i) Pnictogentrihalogenid vorgelegt wird und Trialkylaluminium über einen **Zeitraum** von 1 Minute bis 10 Stunden, bevorzugt 1,5 Stunden bis 3 Stunden, erfolgt.

6. Verfahren nach einem der Ansprüche 1 bis 5, **dadurch gekennzeichnet, dass** die Umsetzung in Schritt (i) bei einer **Reaktionstemperatur** von 25 bis 120 °C, bevorzugt bei 60 bis 110 °C und besonders bevorzugt bei 95 bis 105 °C erfolgt.

7. Verfahren nach einem der Ansprüche 1 bis 6, **dadurch gekennzeichnet, dass** die Destillation des Schrittes (ii) bei Normaldruck bei einer Temperatur von 75 bis 135 °C, bevorzugt bei einer Temperatur von 85 bis 125 °C und besonders bevorzugt bei einer Temperatur von 95 bis 115 °C erfolgt.

8. Verfahren nach Anspruch 3, **dadurch gekennzeichnet, dass** die Destillation zwischen Schritt (i) und Schritt (ii) bei Normaldruck bei einer Temperatur von 75 bis 135 °C, bevorzugt bei einer Temperatur von 85 bis 125 °C und besonders bevorzugt bei einer Temperatur von 95 bis 115 °C erfolgt.

9. Verfahren nach Anspruch 3, **dadurch gekennzeichnet, dass** die Destillation zwischen Schritt (i) und Schritt (ii) unter vermindertem Druck, besonders bevorzugt unter einem Druck von 50 mbar oder weniger erfolgt.

10. Verfahren nach einem der Ansprüche 1 bis 9, **dadurch gekennzeichnet, dass** die Menge an Pnictogentrihalogenid zu Trialkylaluminium 1:1 bis 1:5, bevorzugt 1:1 bis 1:3, besonders bevorzugt 1:1,2 bis 1:1,6 beträgt.

11. Verfahren nach einem der Ansprüche 1 bis 10 umfassend die Schritte
(i) **Umsetzung** von Bismuthtrichlorid mit Trimethylaluminium zu Trimethylbismuth gemäß der Reaktionsgleichung
BiCl₃ + Al(CH₃)₃ → Bi(CH₃)₃ + AlCl₃ ( II),
anschließende **Destillation** des in Schritt (i) hergestellten Trimethylbismuths,
(ii) **Zugabe** von Trioctylamin zu dem in Schritt (ii) erhaltenen Destillats und **Destillation** von Trimethylbismuth.

12. **Verwendung** von Trialkylbismuth, hergestellt nach einem der Verfahren der Ansprüche 1 bis 11 für die Herstellung von Halbleitern oder den Einsatz als Quencher in der Herstellung von Polycarbonat.

## Claims

1. A process for the preparation of a trialkylpnictogen comprising the steps of
(i) **reacting** pnictogen trihalide of the general formula MX₃ with trialkylaluminium of the general formula AlR₃ to give trialkylpnictogen of the general formula MR₃, according to reaction equation (I)
MX₃ + AlR₃ → MR₃ + AlX₃ (I)
wherein,
M is bismuth or antimony, preferably bismuth,
X is in each case independently of one another a halogen, preferably chlorine, bromine or iodine, particularly preferably chlorine, and
R is in each case independently of one another a straight-chain or branched alkyl residue having 1 to 6 carbon atoms, preferably having 1 to 4 carbon atoms, particularly preferably methyl or ethyl and very particularly preferably methyl, and
(ii) **distillation** of trialkylpnictogen of the general formula MR₃ in the presence of trialkylamine of the general formula N(R¹)₃, wherein R¹ is in each case, independently of one another, a straight-chain or branched alkyl residue having 6 to 12 carbon atoms, preferably 6 to 10 carbon atoms and very particularly preferably 8 carbon atoms.

2. The process according to claim 1, **characterized in that** in step (i) pnictogen trihalide is suspended in a medium, preferably in a non-interacting aliphatic or aromatic solvent, distillate cut, mineral oil or trialkylamine, particularly preferably in mineral oil.

3. The process according to claim 1 or 2, **characterized in that** between step (i) and (ii) a distillation of the trialkylbismuth takes place.

4. The process according to any one of claims 1 to 3, **characterized in that** step (i) is carried out in the presence of an alkali halide, preferably in the presence of sodium chloride (NaCI), potassium chloride (KCI), sodium fluoride (NaF), potassium fluoride (KF), sodium bromide (NaBr) or potassium bromide (KBr), and particularly preferably in the presence of sodium chloride.

5. The process according to any one of claims 1 to 4, **characterized in that** in step (i) pnictogen trihalide is added first and the addition of trialkyl aluminium is carried out over a period of 1 minute to 10 hours, preferably 1.5 hours to 3 hours.

6. The process according to any one of claims 1 to 5, **characterized in that** the reaction in step (i) is carried out at a reaction temperature of 25 to 120 °C, preferably at 60 to 110 °C and particularly preferably at 95 to 105 °C.

7. The process according to any one of claims 1 to 6, **characterized in that** the distillation of step (ii) is carried out at normal pressure at a temperature of 75 to 135 °C, preferably at a temperature of 85 to 125 °C and particularly preferably at a temperature of 95 to 115 °C.

8. The process according to claim 3, **characterized in that** the distillation between step (i) and step (ii) is carried out at normal pressure at a temperature of 75 to 135 °C, preferably at a temperature of 85 to 125 °C and particularly preferably at a temperature of 95 to 115 °C.

9. The process according to claim 3, **characterized in that** the distillation between step (i) and step (ii) is carried out under reduced pressure, particularly preferably under a pressure of 50 mbar or less.

10. The process according to any one of claims 1 to 9, **characterized in that** the amount of pnictogen trihalide to trialkylaluminium is 1:1 to 1:5, preferably 1:1 to 1:3, more preferably 1:1.2 to 1:1.6.

11. The process according to any one of claims 1 to 10 comprising the steps of
(i) **reacting** bismuth trichloride with trimethylaluminium to form trimethylbismuth according to the reaction equation
BiCl₃ + Al(CH₃)₃ → Bi(CH₃)₃ + AlCl₃ (II),
followed by **distillation** of the trimethylbismuth produced in step (i),
(ii) **addition** of trioctylamine to the distillate obtained in step (ii) and **distillation** of tri**methyl**bismuth.

12. **Use** of trialkylbismuth prepared by any of the processes of claims 1 to 11 for the manufacture of semiconductors or for use as a quencher in the manufacture of polycarbonate.

## Revendications

1. Procédé pour la préparation de trialkylpnictogène, comprenant les étapes
(i) **mise en réaction** d'un trihalogénure de pnictogène de formule générale MX₃ avec un trialkylaluminium de formule générale AlR₃, conduisant à un trialkylpnictogène de formule générale MR₃, selon l'équation de réaction (I)
MX₃ + AlR₃ → MR₃ + AlX₃ (I)
dans laquelle,
M est le bismuth ou l'antimoine, de préférence le bismuth,
X est chaque fois indépendamment un atome d'halogène, de préférence de chlore, de brome ou d'iode, de façon particulièrement préférée de chlore et
R est chaque fois indépendamment un radical alkyle linéaire ou ramifié ayant de 1 à 6 atomes de carbone, de préférence de 1 à 4 atomes de carbone, de façon particulièrement préférée le groupe méthyle ou éthyle et de façon tout particulièrement préférée le groupe méthyle et
(ii) **distillation** d'un trialkylpnictogène de formule générale MR₃ en présence d'une trialkylamine de formule générale N(R¹)₃, dans laquelle R¹ est chaque fois indépendamment un radical alkyle linéaire ou ramifié ayant de 6 à 12 atomes de carbone, de préférence 6 à 10 atomes de carbone et de façon tout particulièrement préférée 8 atomes de carbone.

2. Procédé selon la revendication 1, **caractérisé en ce que** dans l'étape (i) on met le trihalogénure de pnictogène en suspension dans un milieu, de préférence dans un solvant aliphatique ou aromatique, une fraction de distillat, une huile blanche ou une trialkylamine, n'interagissant pas, de préférence dans une huile blanche.

3. Procédé selon la revendication 1 ou 2, **caractérisé en ce qu'**une distillation du trialkylbismuth a lieu entre l'étape (i) et l'étape (ii).

4. Procédé selon l'une quelconque des revendications 1 à 3, **caractérisé en ce que** l'étape (i) est effectuée en présence d'un halogénure de métal alcalin, de préférence en présence de chlorure de sodium (NaCl), chlorure de potassium (KCl), fluorure de sodium (NaF), fluorure de potassium (KF), bromure de sodium (NaBr) ou bromure de potassium (KBr) et de façon particulièrement préférée en présence de chlorure de sodium.

5. Procédé selon l'une quelconque des revendications 1 à 4, **caractérisé en ce que** dans l'étape (i) on dispose au préalable du trihalogénure de pnictogène et l'addition du trialkylaluminium s'effectue pendant une **durée** de 1 minute à 10 heures, de préférence 1,5 heure à 3 heures.

6. Procédé selon l'une quelconque des revendications 1 à 5, **caractérisé en ce que** la réaction dans l'étape (i) s'effectue à une **température de réaction** de 25 à 120 °C, de préférence à 60 à 110 °C et de façon particulièrement préférée à 95 à 105 °C.

7. Procédé selon l'une quelconque des revendications 1 à 6, **caractérisé en ce que** la distillation de l'étape (ii) s'effectue sous la pression normale à une température de 75 à 135 °C, de préférence à une température de 85 à 125 °C et de façon particulièrement préférée à une température de 95 à 115 °C.

8. Procédé selon la revendication 3, **caractérisé en ce que** la distillation entre l'étape (i) et l'étape (ii) s'effectue sous la pression normale à une température de 75 à 135 °C, de préférence à une température de 85 à 125 °C et de façon particulièrement préférée à une température de 95 à 115 °C.

9. Procédé selon la revendication 3, **caractérisé en ce que** la distillation entre l'étape (i) et l'étape (ii) s'effectue sous pression réduite, de façon particulièrement préférée sous une pression de 50 mbars ou moins.

10. Procédé selon l'une quelconque des revendications 1 à 9, **caractérisé en ce que** la quantité de trihalogénure de pnictogène par rapport au trialkylaluminium vaut de 1:1 à 1:5, de préférence de 1:1 à 1:3, de façon particulièrement préférée de 1:1,2 à 1:1,6.

11. Procédé selon l'une quelconque des revendications 1 à 10, comprenant les étapes
(i) **mise en réaction** de trichlorure de bismuth avec du triméthylaluminium, conduisant au triméthylbismuth selon l'équation de réaction
BiCl₃ + Al(CH₃)₃ → Bi(CH₃)₃ + AlCl₃ (II),
**distillation** subséquente du triméthylbismuth produit dans l'étape (i),
(ii) **addition** de trioctylamine au distillat obtenu dans l'étape (ii) et **distillation** du tri**méthyl**bismuth.

12. **Utilisation** de trialkylbismuth, préparé selon l'un des procédés des revendications 1 à 11, pour la production de semi-conducteurs ou l'utilisation en tant qu'extincteur dans la production de polycarbonate.
